(19) Europäisches Patentamt | European Patent Office | Office européen des brevets

(11) **EP 3 315 247 B1**

(12) **FASCICULE DE BREVET EUROPEEN**

(45) Date de publication et mention
de la délivrance du brevet:
**04.12.2019 Bulletin 2019/49**

(51) Int Cl.:
***B23K 37/00*** *(2006.01)*      ***B23K 26/14*** *(2014.01)*
***B23K 26/38*** *(2014.01)*

(21) Numéro de dépôt: **17198494.1**

(22) Date de dépôt: **22.04.2015**

(54) **BUSE POUR LE COUPAGE LASER AVEC UN ELEMENT MOBILE INTERNE ET UN MANCHON A FAIBLE PERMITTIVITE RELATIVE ; PROCEDE DE COUPAGE PAR FAISCEAU LASER D'UNE PIECE METALLIQUE UTILISANT UNE TELLE BUSE**

SCHNEIDLASERDÜSE MIT EINEM INNEREN BEWEGLICHEN ELEMENT, UND EINER MUFFE MIT EINER NIEDRIGEN RELATIVEN PERMITTIVITÄT ; VERFAHREN ZUM SCHNEIDEN MIT EINEM LASERSTRAHL VON EINEM METALLISCHEN WERKSTÜCK UNTER VERWENDUNG EINER SOLCHEN DÜSE

NOZZLE FOR LASER CUTTING WITH INTERNAL MOBILE ELEMENT AND SLEEVE HAVING LOW RELATIVE PERMITTIVITY ; PROCESS OF CUTTING WITH A LASER BEAM OF A METALLIC WORKPIECE USING SUCH A NOZZLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2014 FR 1454093**

(43) Date de publication de la demande:
**02.05.2018 Bulletin 2018/18**

(62) Numéro(s) de document de la (des) demande(s) initiale(s) en application de l'article 76 CBE:
**15725779.1 / 3 140 075**

(73) Titulaire: **L'AIR LIQUIDE, SOCIETE ANONYME POUR L'ETUDE ET L'EXPLOITATION DES PROCEDES GEORGES CLAUDE**
**75007 Paris (FR)**

(72) Inventeur: **LEFEBVRE, Philippe**
**78250 MEULAN (FR)**

(74) Mandataire: **Debecker, Isabelle Virginie**
**Air Liquide**
**Direction de la Propriete Intellectuelle**
**75, Quai d'Orsay**
**75321 Paris Cedex 07 (FR)**

(56) Documents cités:
**EP-A1- 1 500 459**      **WO-A1-2012/156608**
**WO-A1-2014/072609**      **JP-A- H11 277 271**

**Description**

L'invention concerne une buse laser utilisable en coupage laser avec élément mobile interne comprenant une jupe permettant de concentrer le gaz dans la saignée de coupe, la buse offrant une mise en œuvre au plan industriel améliorée et permettant de préserver la tête de focalisation des effets des chocs que peut subir ladite buse. L'invention concerne également un procédé de coupage par faisceau laser d'une pièce métallique mettant en oeuvre une telle buse, voir revendication 9.

Le coupage par faisceau laser nécessite l'utilisation d'une buse généralement en cuivre ayant pour effet de canaliser le gaz et laisser passer le faisceau laser.

Les buses ont typiquement des diamètres de leur orifice de sortie compris entre 0.5 et 3 mm pour une distance de travail comprise entre 0,6 et 2 mm.

Afin de permettre la découpe, il est nécessaire d'utiliser des pressions élevées, en général de plusieurs bar, dans la tête de focalisation afin de permettre au gaz de rentrer dans la saignée pour chasser le métal en fusion.

Or, une grande partie du gaz utilisée, typiquement entre 50 et 90%, n'a aucune action sur le processus de découpe, c'est-à-dire sur l'expulsion du métal en fusion, car elle part sur les cotés de la saignée de coupe.

Ces pertes de gaz sont en fait dues à l'énorme différence entre la section de passage de l'orifice de buse et la taille de la tâche focale. Ainsi, à titre indicatif, la section de passage d'une buse avec orifice de sortie de diamètre égal à 1.5 mm est 25 fois plus importante que la section de la tache focale créée par le faisceau laser traversant cette buse.

Or, si une proportion insuffisante de gaz est mise en œuvre, on assiste alors à l'apparition de défauts de coupe, en particulier des bavures adhérentes et/ou des traces d'oxydation.

Tenter d'y remédier en réduisant le diamètre de l'orifice de la buse n'est pas idéal car on prend le risque de voir le faisceau laser venir frapper l'intérieur de la buse et la détériorer, ce qui par ailleurs détériore la qualité de coupe et/ou les performances.

Il existe par ailleurs un certain nombre de documents proposant diverses solutions pour tenter de favoriser l'entrée du gaz dans la saignée, par exemple EP-A-1669159, JP-A-62006790, JP-A-61037393, JP-A-63108992, JP-A-63040695 et US-A-4,031,351.

Or, aucune de ces solutions n'est vraiment idéale car souvent d'architecture complexe à mettre en œuvre, de fonctionnement incompatible avec un usage industriel, et/ou présentant une efficacité limitée.

Notamment, le document US-A-4,031,351 divulgue une buse de coupage laser comprenant un élément mobile dont l'extrémité est plaquée par un ressort contre la surface de la pièce à découper pour favoriser l'injection du gaz de coupe dans la saignée. L'inconvénient majeur de cette solution réside dans le fait que la force exercée par le ressort en direction de la tôle, cumulée à la pression du gaz de coupe, conduit l'élément mobile à exercer un effort important sur la tôle à couper. Il s'ensuit un risque de déformation, de rayure, voire d'entraînement de la tôle, laquelle est en général simplement posée sur la table de la machine industrielle de découpe.

Pour y remédier, le document WO-A-2012/156608 (base pour le préambule de la revendication 1) propose une buse laser avec élément mobile apte à se déplacer axialement dans le corps de buse, sous l'effet d'une pression gazeuse, et ce en direction de la surface de la tôle à découper, jusqu'à venir au contact de la tôle. La buse comprend en outre un élément élastique exerçant une force de rappel élastique sur l'élément mobile dans un sens tendant à l'éloigner de la tôle. Ainsi, lorsque le gaz est coupé, l'élément mobile peut être rappelé dans sa position de repos et donc la jupe rentrer à l'intérieur du corps de buse.

Toutefois, cette solution continue de poser certains problèmes.

Tout d'abord, la conception de cette buse ne laisse que peu de liberté pour adapter sa géométrie aux différentes têtes de focalisation existant sur le marché, ainsi qu'aux différentes épaisseurs à découper.

Or, l'inventeur de la présente invention a mis en évidence que la découpe des fines épaisseurs, typiquement moins de 3 mm, nécessitait des orifices d'éjection du gaz d'assistance de diamètres plus importants que les diamètres maximaux accessibles avec la buse selon WO-A-2012/156608. En effet, le diamètre maximal du logement axial usiné dans le corps de buse pour y accueillir l'élément mobile est imposé par le diamètre de la partie supérieure de la buse venant se connecter à la tête de focalisation. De ce fait, l'orifice de sortie de l'élément mobile ne peut être élargi que dans une certaine mesure, typiquement jusqu'à 2 mm, ce qui ne permet pas d'obtenir des performances de coupe satisfaisantes sur fines épaisseurs.

De plus, les machines industrielles de découpe laser et les têtes de focalisation associées mettent en œuvre, de façon connue en soi, un système de capteur de distance capacitif pour déplacer la tête à une distance constante au-dessus de la tôle à découper.

Or, il s'avère que les systèmes de capteur capacitif actuels ne peuvent pas détecter un obstacle latéral s'étendant au-dessus de la surface de la tôle. Un tel obstacle peut résulter par exemple de pièces déjà découpées restées coincées dans la tôle et positionnées en biais par rapport à sa surface. Les découpes débutées à partir d'un bord de tôle peuvent également générer des marches ou dénivelés, c'est-à-dire des différences de niveaux entre différentes parties de la tôle, du fait d'une déformation ou d'un abaissement de certaines parties de la tôle se produisant en cours de découpe.

Il s'ensuit des risques de chocs au niveau du corps de buse pouvant endommager la buse et en altérer le fonctionnement, jusqu'à entraîner sa rupture ou détérioration complète. L'aspect le plus problématique est qu'un choc au niveau du corps de buse peut aussi endommager la tête de focalisation au niveau de sa connexion avec la buse et entraîner un déplacement de la tête sur son support, ce qui provoque un désalignement du faisceau laser. Il est alors nécessaire d'intervenir sur la tête de focalisation et de procéder à son réalignement, ce qui nuit à la productivité de la machine de découpe.

Le document JP-A-2011-177727 divulgue un corps de buse formé en deux parties de manière à éviter l'endommagement de la tête de focalisation lors d'une collision avec un obstacle.

Néanmoins, ceci ne résout pas certains problèmes rencontrés avec la buse selon WO-A-2012/156608 dans le cadre d'un usage industriel.

Ainsi, un système de capteur de distance capacitif utilise l'effet capacitif pour détecter de faibles variations de distance entre deux éléments conducteurs formant un condensateur. La distance séparant les deux éléments conducteurs est déterminée en mesurant la capacité électrique de ce condensateur, qui dépend notamment de la permittivité diélectrique du milieu qui les sépare.

Dans une machine de découpe munie d'une buse laser traditionnelle, généralement formée d'un matériau électriquement conducteur tel du cuivre, le capteur capacitif mesure la capacité électrique entre la tôle et la surface plate de la buse située en regard de la tôle. Le capteur capacitif est relié électriquement aux commandes de déplacements de la tête de focalisation de manière à ajuster le positionnement en hauteur de la tête en cas de variations de la capacité électrique mesurée ou à stopper le déplacement de la tête en cas de contact entre la buse et la tôle.

Ce système de capteur capacitif permet d'assurer des performances de coupe constantes, en termes de vitesse et qualité de coupe, en maintenant le point de focalisation du faisceau laser à une position constante par rapport à la surface de la tôle. Il permet aussi de déclencher l'arrêt de la machine en cas d'obstacles présents sur la tôle.

Il est donc indispensable de ne pas perturber son fonctionnement.

Or, la buse laser décrite dans WO-A-2012/156608 est difficilement compatible avec un tel système.

En effet, l'élément mobile de la buse forme une jupe en contact avec la tôle à découper. Pour garantir sa résistance à la chaleur dégagée par le procédé de découpe ainsi qu'aux projections de métal fondu, l'élément mobile est en général formé d'un matériau conducteur électriquement tel un matériau métallique (cuivre, laiton ou analogue). Toutefois, l'élément mobile conducteur électriquement est alors à la fois en contact avec la tôle, c'est-à-dire au même potentiel électrique que celle-ci, et en contact avec les parois internes du corps de buse, généralement formé lui aussi d'un matériau électriquement conducteur. Il faut donc désactiver le capteur capacitif pour éviter une mise en défaut de la machine de coupage.

Une solution pour autoriser le fonctionnement du capteur capacitif de la machine serait d'utiliser un élément mobile formé d'un matériau isolant électriquement. Mais cette solution n'est pas idéale car les matériaux isolants électriquement sont en général peu résistants à la forte chaleur dégagée par le procédé de découpe, aux projections de métal en fusion et/ou aux chocs thermiques. Par ailleurs, EP-A-1500459 et JP-A-11277271 enseignent des buses comprenant un corps et un élément interne fixe par rapport audit corps, un manchon isolant électrique étant agencé entre le corps et l'élément interne.

Le problème qui se pose est dès lors de pallier tout ou partie des inconvénients susmentionnés, en proposant notamment une buse laser dont la robustesse, la durée de vie et la mise en œuvre au plan industriel sont grandement améliorée par rapport aux solutions existantes et qui ne perturbe pas, ou nettement moins que dans l'art antérieur, le fonctionnement d'un système de capteur de distance capacitif équipant une machine de découpe industrielle.

La solution de la présente invention est alors une buse de coupage laser telle que définie dans la revendication 1.

Selon le cas, la buse de l'invention peut comprendre l'une ou plusieurs des caractéristiques techniques suivantes :

- le manchon séparateur est formé d'un matériau isolant électriquement ayant une permittivité relative inférieure à 6.
- le manchon séparateur est en un matériau céramique isolante électriquement, par exemple du type $Al_2O_3$, AlN, $ZrO_2$ ou $Al_2TiO_5$, un matériau polymère, par exemple du polyétheréthercétone (Peek) ou Vespel®, de céramique électriquement isolante ou de pyrex.
- le manchon séparateur est formé d'un matériau choisi parmi : les mousses de céramique telles la mousse d'alumine ou l'alumine poreuse, les vitrocéramiques, par exemple le Macor®, ou les céramique techniques telles le nitrure de bore, la mullite, la stéatite, la cordiérite.
- le matériau céramique est du nitrure de bore.
- le manchon séparateur comprend un deuxième logement axial comprenant un troisième orifice de sortie situé au niveau d'une face avant dudit manchon séparateur, l'élément mobile étant agencé dans ledit deuxième logement axial et ledit troisième orifice de sortie débouchant au-dessus dudit deuxième orifice de sortie du passage axial de l'élément mobile lorsque la partie avant fait saillie à l'extérieur du premier logement axial.
- les premiers moyens de fixation s'étendent à travers au moins une partie des première et deuxième parties du corps de buse et selon une direction généralement parallèle à l'axe du premier logement axial.

- la deuxième partie du corps de buse comprend des deuxièmes moyens de fixation aptes à et conçus pour fixer ladite deuxième partie à une tête de focalisation laser.
- les premiers et deuxièmes moyens de fixation sont aptes à et conçus pour fixer la deuxième partie du corps de buse à la tête de focalisation laser plus solidement qu'à la première partie, de manière à ce que, en cas de choc au niveau de la première partie du corps de buse, il se produise une déformation ou une rupture du corps de buse essentiellement entre la première partie du corps de buse et la deuxième partie.
- l'élément mobile est apte à et conçu pour se déplacer en translation dans le premier logement axial en direction du premier orifice de sortie jusqu'à ce que la partie avant fasse saillie à l'extérieur dudit premier logement axial au travers du premier orifice de sortie.
- l'élément mobile est apte à se déplacer en translation dans le premier logement axial en direction du premier orifice de sortie sous l'effet d'une pression gazeuse s'appliquant dans le premier logement axial et s'exerçant sur l'élément mobile.
- la buse comprend en outre un élément élastique agencé dans le premier logement axial, entre le corps de buse et l'élément mobile, ledit élément élastique exerçant une force de rappel élastique sur l'élément mobile tendant à s'opposer au mouvement de translation dans le premier logement axial en direction du premier orifice de sortie.
- l'élément mobile est apte à se déplacer entre plusieurs positions comprenant :
- une position de repos dans laquelle la partie avant de l'élément mobile est totalement ou quasi-totalement rentrée dans le logement axial, et
- une position de travail dans laquelle la jupe de la partie avant de l'élément mobile fait totalement ou quasi-totalement saillie à l'extérieur du logement axial, au travers du premier orifice de sortie.
- au moins un élément d'étanchéité est agencé entre le corps de buse et l'élément mobile, par exemple un ou plusieurs joints toriques.
- ledit au moins un élément d'étanchéité est agencé dans une gorge périphérique aménagée dans la paroi périphérique externe de l'élément mobile.
- le passage axial de l'élément mobile a un profil de forme conique, tronconique ou convergente/divergente.
- le corps de buse est avantageusement en un matériau métallique, tel de l'acier, du bronze, de l'acier réfractaire, du cuivre, du laiton, ou un matériau céramique électriquement conducteur.
- l'élément mobile est avantageusement formé d'un matériau métallique, tel de l'acier, du bronze, de l'acier réfractaire, du cuivre, du laiton, ou un matériau céramique électriquement conducteur. De préférence, l'élément mobile est formé d'un matériau électriquement conducteur qui induise un frottement limité sur la tôle pour limiter une usure de la tôle. Avantageusement, l'élément mobile est formé d'un alliage de bronze au plomb.

Selon encore un autre aspect, l'invention a également trait à un procédé de coupage par faisceau laser d'une pièce métallique, dans lequel on met en œuvre une buse selon l'invention, voir la revendication 9.

L'invention va maintenant être mieux comprise grâce à la description suivante faite en références aux Figures annexées parmi lesquelles :

- la Figure 1A schématise une tête de focalisation d'une installation de coupage laser classique,
- la Figure 1B schématise la taille du spot laser par rapport à la taille de l'orifice de buse,
- la Figure 2 est un schéma en coupe du corps d'une buse selon un mode de réalisation de l'invention, sans qu'un élément mobile y soit agencé,
- la Figure 3 est un schéma en coupe d'une buse selon un mode de réalisation de l'invention, et
- les Figures 4A et 4B montrent la buse de l'invention avec l'élément mobile dans deux positions différentes.

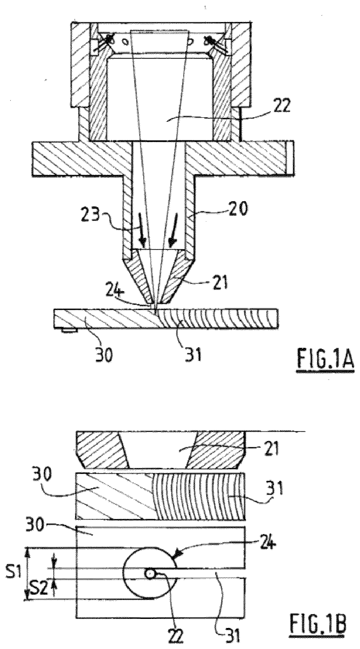

La Figure 1A représente la tête de focalisation 20 d'une installation de coupage laser classique, à laquelle est fixée une buse laser 21 classique qui est traversée par un faisceau laser focalisé et par du gaz d'assistance (flèche 23) servant à expulser le métal fondu par le faisceau hors de la saignée 31 de coupe formée par le faisceau 22 dans la pièce métallique à couper 30, par exemple une tôle en acier ou en acier inoxydable.

Le gaz d'assistance peut être un gaz actif, tel de l'oxygène, de l'air, du $CO_2$, de l'hydrogène, ou un gaz inerte, tel l'argon, l'azote, l'hélium, ou un mélange de plusieurs ces gaz actifs et/ou inertes. La composition du gaz est choisie notamment en fonction de la nature de la pièce à couper.

Le faisceau qui vient impacter la pièce va y fondre le métal qui sera expulsé en-dessous de la pièce par la pression du gaz d'assistance.

La Figure 1B permet de bien visualiser la section SI de passage de l'orifice 24 de la buse 21 par rapport à la taille S2 de la tâche focale du faisceau 22. Comme on le voit, la section SI est très supérieure à la taille S2 de la tâche focale du faisceau 22, ce qui engendre, avec les buses classiques, une consommation élevée de gaz d'assistance dont seulement une faible proportion va servir à expulser le métal fondu hors de la saignée de coupe 31.

Pour réduire considérablement la consommation de gaz ainsi que la pression nécessaire à la découpe, il a été proposé dans le document WO-A-2012/156608 une buse laser apte à et conçue pour couper avec un faisceau laser en mettant en œuvre un débit de gaz et/ou une pression de gaz réduits grâce à une architecture de buse particulière permettant de forcer une proportion plus importante de gaz à rentrer dans la saignée 31 et à y expulser efficacement le métal fondu.

Selon WO-A-2012/156608, la buse laser comprend un corps 1 de buse coopérant avec un élément mobile 2 agencé et façon mobile à l'intérieur du corps 1 de la buse.

Toutefois, la construction de cette buse laser n'est idéale, et ce pour les raisons déjà mentionnées.

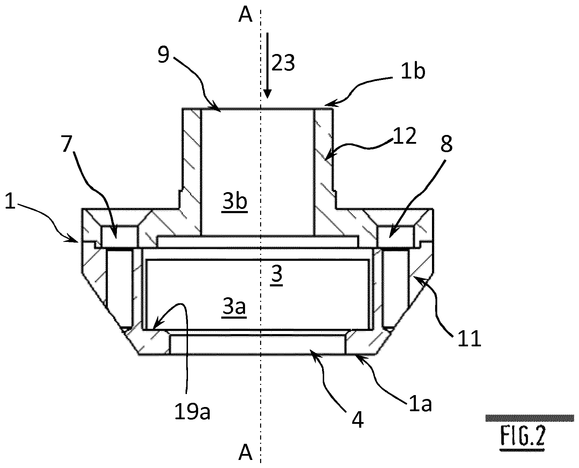

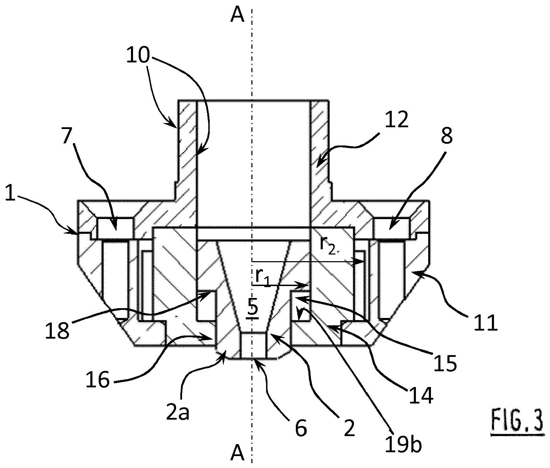

Pour y remédier, et comme illustré sur les Figures 2 et 3, la présente invention propose une buse laser comprenant un élément mobile 2 et un corps 1 formé d'au moins une première partie 11 agencée autour de l'élément mobile 2 et une deuxième partie 12 venant se positionner, en suivant le sens d'écoulement du gaz d'assistance (flèche 23), au-dessus de ladite première partie 11. Le corps 1 de buse comprend en outre des premiers moyens de fixation 7, 8 aptes à et conçus pour fixer la deuxième partie 12 sur la première partie 11.

En fait, lors de l'assemblage de la buse, l'élément mobile 2 est tout d'abord agencé au sein de la première partie 11. La deuxième partie 12 vient ensuite se superposer et se fixer à la première partie 11 du corps 1 de buse. Ainsi, il est possible de conserver une deuxième partie 12 dont la géométrie est adaptée à la tête de focalisation sur laquelle doit se fixer le corps 1 de buse, tout en augmentant le volume disponible au sein de la première partie 11 pour accueillir l'élément mobile 2.

Il est alors possible d'élargir le passage axial 5 et l'orifice de sortie 6 de l'élément mobile 2, le diamètre de l'orifice de sortie 6 pouvant aller typiquement jusqu'à 10 mm, de préférence 6 mm. Ceci permet d'élargir la couverture gazeuse de la saignée de coupe et de prévenir les phénomènes d'oxydation des faces de coupe pouvant se produire aux grandes vitesses de coupe atteintes sur fines épaisseurs de tôle, typiquement de 3 à 30 m/min pour des épaisseurs inférieures à 3 mm, en particulier lors de la découpe d'acier inoxydable sous azote en tant que gaz d'assistance 23.

En outre, la buse selon l'invention permet de préserver la tête de focalisation des effets néfastes provoqués par d'éventuels obstacles sur la tôle. En effet, lorsqu'un obstacle se trouve à la surface de la tôle, c'est essentiellement au niveau de la première partie 11 du corps 1 de buse, positionnée immédiatement au-dessus de la tôle que se produit le choc. La construction du corps 1 de buse en plusieurs parties assemblées, et non plus en un seul bloc, procure une certaine souplesse de déplacement de la première partie 11 par rapport à la deuxième partie 12 et/ou une possibilité de rupture de la liaison entre la première partie 11 et la deuxième partie 12. Ceci permet, en cas de choc, de minimiser les risques de déplacement de la deuxième partie 12 par rapport à la tête de focalisation et/ou de la tête de focalisation par rapport à son support.

Avantageusement, le corps 1 de buse est une pièce de révolution traversée de part en part par un premier logement axial 3 d'axe AA qui s'étend depuis la face arrière 1b du corps 1 jusqu'à la face avant la dudit corps 1.

Le premier logement axial 3 débouche au niveau des deux faces avant la et arrière 1b du corps 1 de buse. La face arrière 1b porte un orifice d'entrée 9, alors que la face avant la porte un premier orifice de sortie 4 du corps de buse 1, les premiers orifices d'entrée 9 et de sortie 4 étant coaxiaux d'axe AA.

Ce premier logement axial 3 est en fait un évidement formé d'une deuxième portion 3b s'étendant à travers la deuxième partie 12 et d'une première portion 3a s'étendant à travers la première partie 11. Les première et deuxième portions 3a, 3b dont de préférence de forme cylindrique, la première portion 3a comprenant un premier épaulement 19a interne se projetant radialement vers le centre du premier logement 3, ledit premier épaulement interne 19a étant formé par une restriction de la section du premier logement axial 3 au niveau du premier orifice de sortie 4. De préférence, le premier épaulement interne 19a est aménagé au niveau du fond dudit premier logement axial 3.

La buse comprend par ailleurs un élément mobile 2 venant s'insérer dans le premier logement 3 du corps 1 de buse, de préférence coaxialement au corps 1, comme visible en Figure 3. L'élément mobile 2 comprend une partie avant 2a formant une jupe de forme cylindrique, c'est-à-dire tubulaire, et un passage axial 5 avec un deuxième orifice de sortie 6 débouchant au niveau de ladite partie avant 2a formant jupe.

Le passage axial 5 peut avoir un profil interne conique, avec canal de sortie cylindrique ou non, tronconique, de type convergent/divergent (i.e. tuyère de Laval) ou toute autre géométrie adaptée.

Dans le cadre de l'invention, l'élément mobile (2) est formé d'un matériau conducteur électriquement. En effet, l'élément mobile se situe à proximité immédiate de la zone de découpe et ce type de matériau offre une résistance plus grande aux fortes températures ainsi qu'aux chocs (impacts de l'élément mobile sur la tôle) et/ou thermiques (allumage et extinction du laser). Par exemple, l'élément mobile 2 peut être formé d'acier, d'acier trempé, de carbone, d'un matériau composite...

De préférence, on choisira un matériau conducteur induisant un frottement limité sur la tôle pour limiter une usure de la tôle, c'est-à-dire un matériau peu ou pas abrasif.

Avantageusement, l'élément mobile 2 est formé d'un alliage de bronze au plomb. En effet, un tel matériau offre l'avantage de présenter de bonnes propriétés de frottement, une bonne résistance à l'usure sous fortes charges et une bonne tenue à la corrosion. Son utilisation est particulièrement avantageuse dans des conditions de lubrification difficiles du fait de son pouvoir auto-lubrifiant. Ceci réduit grandement, voire élimine, le risque de rayer ou d'entraîner la tôle lorsque l'élément mobile est en contact avec sa surface.

A noter que dans le cadre de la présente invention, on entend par matériau électriquement isolant, ou matériau diélectrique, un matériau qui ne conduit pas l'électricité, c'est-à-dire qui interdit le passage de courant électrique entre deux éléments conducteurs électrique. A l'inverse, un matériau conducteur électriquement contient de nombreux porteurs de charge électrique pouvant se déplacer facilement sous l'action d'un champ électromagnétique.

Le corps (1) de buse est formé d'un matériau conducteur électriquement. En d'autres termes, les première et deuxième parties 11, 12 du corps 1 de buse sont formées d'un matériau conducteur électriquement. Ce matériau peut être un matériau métallique, par exemple de l'acier, du bronze, de l'acier réfractaire, du cuivre, du laiton, ou un matériau céramique électriquement conducteur.

L'utilisation d'un matériau conducteur pour les première et deuxième parties 11, 12 du corps 1 de buse est avantageuse car elle permet l'utilisation d'un système de capteur capacitif. En effet, en condition d'utilisation, le corps 1 de buse est monté à l'extrémité d'une tête de focalisation 20 comprenant, de façon connue en soi, un système de capteur capacitif. Ce système utilise l'effet capacitif pour détecter de faibles variations de distance entre deux éléments conducteurs formant un condensateur. La distance séparant les deux éléments conducteurs est déterminée en mesurant la capacité électrique de ce condensateur, qui dépend notamment de la permittivité diélectrique du milieu qui les sépare.

Les buses laser traditionnelles sont en général formées d'un matériau électriquement conducteur tel le cuivre. Lorsque la buse est montée à l'extrémité de la tête, elle est reliée électriquement au système de capteur capacitif. De la sorte, le capteur capacitif peut mesurer la capacité électrique entre la tôle et la surface plane de la buse située en regard de la tôle. Le capteur capacitif est lui-même relié électriquement aux commandes de déplacements de la tête de focalisation 20 de manière à ajuster le positionnement en hauteur de la tête en cas de variations de la capacité mesurée.

Lorsque la buse laser selon l'invention est assemblée à la tête de focalisation, le corps 1 de buse en matériau conducteur peut ainsi être relié électriquement au système de capteur capacitif équipant la tête. Avantageusement, cette liaison électrique s'effectue par contact d'au moins une portion de la deuxième partie 12 du corps 1 avec une pièce de la tête 20 formée d'un matériau électriquement conducteur et faisant partie du système de capteur capacitif.

Lorsque l'élément mobile 2 électriquement conducteur se met en contact avec la tôle, il est au même potentiel électrique que celle-ci.

Par conséquent, la buse selon l'invention comprend un manchon séparateur 14 agencé entre la première partie 11 et l'élément mobile 2 et formé d'un matériau conducteur électriquement.

Ceci permet de ne pas mettre en défaut le capteur capacitif ni de perturber son focntionnement.

En fait, le capteur capacitif mesure alors une ou plusieurs valeurs de capacité électrique entre la face avant la du corps 1 de buse et la surface supérieure de la pièce à couper 30. A partir de ces valeurs, le capteur permet d'ajuster la distance entre la coiffe et la tôle à une valeur constante ou quasi-constante, typiquement entre 0,1 et 5 mm, de préférence entre 0,5 et 2 mm, et de corriger les défauts de planéité de la tôle.

Dans le cadre de la présente invention, on utilise un manchon séparateur 14 formé d'un matériau présentant une faible permittivité.

En effet, dans le cas d'une buse laser classique, i. e. sans élément mobile, la mesure de capacité a lieu entre deux surfaces planes en regard l'une de l'autre, i. e. la face avant du corps de buse et la surface supérieure de la pièce à couper. Dans ce cas, la capacité C s'exprime (en pF/m) selon la formule suivante :

$$C = \varepsilon_0 \varepsilon_r \times \frac{S}{d}$$

où $\varepsilon_0$ est la permittivité du vide égale à 8,85 pF/m, $\varepsilon_r$ est la permittivité relative du matériau séparant la face avant du corps de buse et la surface supérieure de la pièce à couper, d'une valeur de 1, 004 pour l'air, S est la surface de buse se trouvant en regard de la tôle à couper (exprimée en m$^2$), et d est la distance entre la face avant du corps de buse et la surface supérieure de la pièce à couper (exprimée en m).

Dans le cas d'une buse laser à élément mobile selon l'invention, le système de capteur capacitif réalise en fait deux types de mesures de capacité. Avant que l'élément mobile ne se mette en contact avec la surface supérieure de la tôle, le capteur réalise une première mesure entre deux surfaces planes, i. e. la face avant du corps de buse et la surface supérieure de la pièce à couper. Cette mesure est la mesure de référence permettant de maintenir le corps 1 de buse à la hauteur souhaitée par rapport à la pièce à couper. Une fois que l'élément mobile 2 est en contact avec la pièce pour réaliser l'opération de coupage proprement dite, celui-ci se met au même potentiel que la pièce. Le capteur réalise alors, en plus de la première mesure de capacité, une mesure de capacité globale résultant d'une multitude de mesures prises entre la surface extérieure de l'élément mobile 2 et la surface intérieure de la première partie 11 du corps. En effet, la distance entre ces surfaces varie selon la position considérée le long de l'axe AA de la buse.

En un point donné le long de l'axe AA de la buse, la capacité C s'exprime (en pF/m) selon la formule suivante :

$$C = 2\pi\varepsilon_0\varepsilon_r \times \frac{l}{\ln\dfrac{r_2}{r_1}}$$

où $r_2$ est le rayon du premier logement axial 3, et $r_1$ le rayon de l'élément mobile 2 au point considéré (voir Figure 3), et l est la distance (exprimée en m) le long de l'axe AA sur laquelle le premier logement axial 3 et l'élément mobile 2 ont respectivement les rayons $r_2$ et $r_1$

Or, l'inventeur de la présente invention a mis en évidence que l'utilisation d'un manchon séparateur 14 formé d'un matériau de faible permittivité relative permettait d'améliorer la stabilité du capteur capacitif en réduisant les perturbations dues à la mesure de capacité globale, en plus de la première mesure de référence. Il est ainsi possible de conserver en cours de coupe un positionnement du corps 1 de buse à une hauteur très proche, voire identique à la hauteur de référence avant le début de la coupe.

Par matériau à faible permittivité relative, on entend un matériau dont la permittivité relative est inférieure à 8, de préférence inférieure à 6.

Avantageusement, l'épaisseur en tout point de la paroi périphérique du manchon séparateur 14 est d'au moins 0,5 mm, de préférence au moins 1 mm, et avantageusement comprise entre 0,5 et 10 mm, de préférence comprise entre 1 et 3 mm.

On choisira aussi avantageusement un matériau résistant à des températures de l'ordre de 100 à 2000 °C, typiquement entre 500 et 1500 °C.

Selon un mode de réalisation particulier, les dimensions extérieures du manchon séparateur 14 sont choisies de sorte à ménager un espace entre la première partie 11 du corps 1 de buse et l'élément mobile 2. Cet espace rempli d'air permet de réduire encore plus l'influence néfaste de la mesure de capacité globale sur la stabilité du positionnement en hauteur du corps 1 de buse.

De préférence, le manchon séparateur 14 est formé d'un matériau choisi parmi : les mousses de céramique telles la mousse d'alumine ou l'alumine poreuse, les vitrocéramique, par exemple le Macor®, ou les céramiques techniques telles le nitrure de bore, la mullite, la stéatite, la cordiérite. Le tableau 1 ci-dessous présente les plages de valeurs de permittivité relative des matériaux précités, celles-ci pouvant varier selon les grades de matériaux sélectionnés et les types de procédés de fabrication utilisés.

L'utilisation d'un matériau céramique, tel le nitrure de bore, est particulièrement avantageuse du fait de sa bonne résistance aux fortes température ainsi qu'aux chocs thermiques et à l'usure. Le nitrure de bore en particulier offre une excellente usinabilité.

Tableau 1

| Type de céramique | Plage de permittivité relative |
|---|---|
| Alumine poreuse | 1.7 - 1.9 |
| Macor® | 5.6 - 6.1 |
| Nitrure de bore | 4 - 5 |
| Mullite | 5.5 - 6.5 |
| Stéatite | 5.7 - 6.2 |
| Cordiérite | 4.8 - 5.2 |

Avantageusement, le manchon séparateur 14 comprend un deuxième logement axial 15 comprenant un troisième orifice de sortie 16 situé au niveau d'une face avant 14a dudit manchon séparateur 14, l'élément mobile 2 étant agencé dans ledit deuxième logement axial 15 et ledit troisième orifice de sortie 16 débouchant au-dessus dudit deuxième orifice de sortie 6 du passage axial 5 de l'élément mobile 2 lorsque la partie avant 2a fait saillie à l'extérieur du premier logement axial 3. Le deuxième logement axial 15 comprend avantageusement un deuxième épaulement interne 19b se projetant radialement vers le centre dudit deuxième logement 15 et situé de préférence au fond dudit deuxième logement 15.

La paroi périphérique de l'élément mobile 2 comprend avantageusement une première butée 18 agencée au niveau de la surface externe. De préférence, la première butée 10 est de forme annulaire et s'étend sur tout ou partie de la périphérie de l'élément mobile 2. Selon que la buse comprenne ou non un manchon intermédiaire 14, la première butée 18 est agencée en regard du premier épaulement 19a du corps 1 de buse ou du deuxième épaulement 19b du manchon 14.

Comme schématisé sur les Figures 2 et 3, les premiers moyens de fixation 7, 8 permettant de fixer la deuxième partie 12 sur la première partie 11 du corps 1 de buse s'étendent avantageusement à travers au moins une partie des première et deuxième parties du corps 1 de buse et selon une direction généralement parallèle à l'axe AA du premier logement axial 3. Un tel agencement permet de réduire l'encombrement du corps 1 de buse et favorise en outre, en cas de choc important subi par la première partie 11, une rupture franche entre la première partie 11 et la deuxième partie 12.

Les premiers moyens de fixation 7, 8 peuvent permettre une fixation amovible ou inamovible de la première 11 à la deuxième partie 12 du corps 1 de buse.

Selon un mode de réalisation préféré de l'invention, les premiers moyens de fixation 7, 8 comprennent au moins un premier perçage taraudé traversant au moins partiellement les première et deuxième parties 11, 12 du corps 1 de buse et une pièce cylindrique filetée (non illustré) conformée pour être vissée dans ledit premier perçage taraudé. Les Figures 2 et 3 illustrent un mode de réalisation où les premiers moyens de fixation 7, 8 comprennent deux perçages taraudés diamétralement opposés.

Selon une variante de réalisation, les premiers moyens de fixation 7, 8 comprennent des moyens de fixation de la première partie 11 à la deuxième partie 12 par clipsage, baïonnette ou sertissage.

De préférence, la deuxième partie 12 du corps 1 de buse comprend des deuxièmes moyens de fixation 10 aptes à et conçus pour fixer ladite deuxième partie 12 à la tête de focalisation laser 20.

Comme illustré sur la Figure 3, la deuxième partie 12 peut ainsi comprendre une partie d'extrémité de forme tubulaire, ladite partie d'extrémité comprenant un premier filetage 10 agencé sur la surface externe de la dite partie d'extrémité ou un premier taraudage 10 agencé sur la surface interne de la dite partie d'extrémité. Le premier filetage ou taraudage 10 est conformé pour être vissé respectivement dans un deuxième taraudage ou autour d'un deuxième filetage de la tête de focalisation laser 20 (non illustré).

Avantageusement, les premiers 7, 8 et deuxièmes moyens de fixation 10 sont aptes à et conçus pour fixer la deuxième partie 12 du corps 1 de buse à la tête de focalisation laser 20 plus solidement qu'à la première partie 11, de manière à ce que, en cas de choc au niveau de la première partie 11 du corps 1 de buse, il se produise une déformation ou une rupture du corps 1 de buse essentiellement entre la première partie 11 et la deuxième partie 12 du corps 1 de buse. De la sorte, on minimise grandement le risque de rupture ou de déformation au niveau de la tête de focalisation 20, ce qui évite de longues opérations de maintenance au niveau de l'installation de découpe.

Selon un mode de réalisation particulier, ce contrôle de la solidité de la fixation de la deuxième partie 12 à la tête de focalisation 20 par rapport à la solidité de la fixation de la deuxième partie 12 à la première partie 11 peut être obtenu par un dimensionnement des filets, en termes de diamètres et/ou de pas, des filetages ou taraudages des premiers 7, 8 et deuxièmes moyens de fixation 10. Les premiers 7, 8 et deuxièmes moyens de fixation 10 peuvent aussi être des moyens de fixation rapide, en particulier des moyens de fixation à encliquetage ou clipsage, sertissage ou à baïonnette.

Pendant l'utilisation de la buse, le faisceau laser 22 et le gaz d'assistance 23 traversent le passage axial 5 de l'élément mobile 2 et ressortent par le deuxième orifice de sortie 6 débouchant au niveau de la partie avant 2a formant jupe.

Avantageusement, l'élément mobile 2 est déplaçable en translation selon l'axe AA dans le premier logement axial 3 en direction du premier orifice de sortie 4 jusqu'à ce que la partie avant 2a fasse saillie à l'extérieur dudit premier logement axial 3, au travers du premier orifice de sortie 4.

De préférence, l'élément mobile 2 se déplace sous l'effet de la pression du gaz d'assistance 23 qui vient s'exercer sur ledit élément mobile 2, ce qui tend à le pousser en direction de la pièce à couper 30.

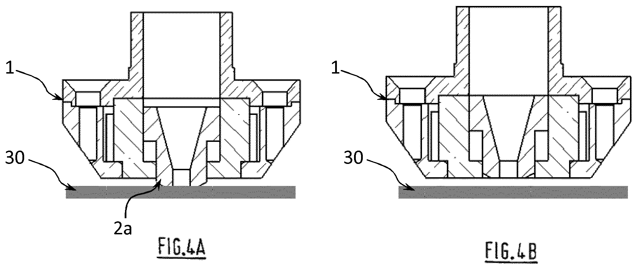

Le déplacement en translation selon l'axe AA de l'élément mobile 2 va provoquer le rapprochement de la jupe de la surface supérieure 30 de la tôle à couper, qui vont venir en contact l'une de l'autre, comme illustré en Figure 4B. Ainsi, le gaz va être canalisé par la jupe et se trouver concentré au niveau de la tâche laser et donc de la saignée, ce qui va grandement améliorer son efficacité d'expulsion du métal fondu par le faisceau laser 22.

Avantageusement, un élément élastique 17, tel un ressort, est agencé dans le premier logement axial 3, entre le corps de buse 1 et l'élément mobile 2 ou dans le deuxième logement axial 15, entre le manchon séparateur 14 et l'élément mobile 2. Plus précisément, l'élément élastique de manière à exercer une force de rappel élastique sur l'élément mobile 2 dans un sens tendant à l'éloigner de la pièce à couper 30. Ainsi, en fin de coupe, lorsque le gaz est coupé et que la pression gazeuse cesse de s'exercer sur l'élément mobile 2, celui-ci peut être rappelé dans sa position de repos et donc la jupe rentrer à l'intérieur du premier logement 3. L'élément élastique 17 est avantageusement agencé entre la première butée 18 et le premier épaulement 19a du corps 1 de buse ou du deuxième épaulement 19b du manchon 14 selon qu'un manchon est agencé ou non dans le premier logement axial 3.

L'élément élastique 17 permet ainsi de limiter le phénomène d'usure de la jupe lors des phases de perçage de la tôle qui précèdent généralement les phases de découpe. En effet le perçage est le plus souvent opéré avec de faibles pressions de gaz, typiquement moins de 4 bar. L'élément élastique exerce alors une force de rappel suffisante pour que la jupe remonte totalement ou quasi-totalement dans le premier logement 3 et soit ainsi protégée des projections de métal fondu générées par le perçage.

En outre, l'élément élastique 17 facilite les déplacements rapides de la tête de découpe à faible distance au-dessus de la tôle, sans gaz de coupe ni faisceau, puisque la pression gazeuse cesse alors de s'exercer sur l'élément mobile et la jupe rentre à l'intérieur du premier logement 3. Seule la jupe remonte et il n'est pas nécessaire de relever la tête de focalisation supportant la buse.

L'élément élastique 1 permet aussi de limiter la pression exercée par l'élément mobile 2 sur la pièce à couper lorsque celui-ci se déplace en direction de la pièce sous l'effet du gaz de coupe. Plus précisément, la force de rappel de l'élément élastique 8 est avantageusement dimensionnée de manière à maintenir l'élément mobile 2 au contact de la pièce à couper tout en limitant la pression que ledit élément exerce sur la tôle, pour minimiser grandement, voire éliminer, tout risque de déformation de la tôle dans laquelle la pièce est découpée, de rayures de la surface de la tôle, et d'entraînement de la tôle.

Selon le cas, l'élément mobile 2 peut comprendre une partie avant 2a de forme cylindrique, c'est-à-dire de diamètre externe constant le long de l'axe AA, ou une portion d'extrémité conformée pour passer sur un dénivelé ou un obstacle sans ou avec un choc grandement réduit au niveau de la jupe 6.

Avantageusement, la partie avant 2a comprend une portion d'extrémité dont le diamètre externe diminue progressivement en direction du deuxième orifice de sortie 12. De la sorte, la partie avant 2a est conformée pour faciliter son passage sur des reliefs ou obstacles présents à la surface de la tôle. Les chocs sont mieux absorbés car la diminution progressive du diamètre externe de la portion d'extrémité favorise la remontée de la jupe 6 vers le logement 5 lorsque la jupe 6 rencontre un dénivelé ou sur un obstacle ponctuel.

Par portion d'extrémité, on entend une portion de la partie avant 2a située à l'extrémité de ladite partie avant, c'est-à-dire en regard de la surface supérieure de la tôle à couper.

Optionnellement, au moins un élément d'étanchéité, par exemple un joint élastomère, est agencé entre le corps de buse 1 et l'élément mobile 2 ou entre le manchon séparateur 14 et l'élément mobile 2, en particulier un ou plusieurs joints toriques, ce qui permet d'assurer une étanchéité entre le corps de buse 1 ou le manchon séparateur 14 et l'insert mobile 2. De préférence, ledit élément d'étanchéité est agencé dans une gorge périphérique aménagée dans la paroi périphérique externe de l'élément mobile 2.

En fait, l'élément mobile 2 de la buse selon l'invention est apte à se déplacer entre plusieurs positions comprenant au moins :

- une position de travail dans laquelle la partie avant 2a fait totalement ou quasi-totalement saillie à l'extérieur du premier logement axial 3 du corps de buse 1, au travers du premier orifice de sortie 4, et vient au contact de la pièce 30 à couper, comme illustré en Figure 4A, et
- une position de repos dans laquelle la partie avant 2a est totalement ou quasi-totalement rentrée dans le premier logement axial 3 du corps de buse 1, comme illustré en Figure 4B.

Bien entendu, l'élément mobile 2 peut occuper des positions intermédiaires dans lesquelles la partie avant 2a ne fait que partiellement saillie à l'extérieur du premier logement axial 3 du corps de buse 1. Ces positions intermédiaires peuvent être notamment fonction de la pression exercée par le gaz sur l'élément mobile 2.

Afin de montrer l'efficacité de la buse selon l'invention par rapport à une buse standard, c'est-à-dire une buse classique sans élément mobile, et donc l'intérêt de forcer le gaz dans la saignée de coupe grâce à la mise en œuvre d'une jupe montée sur un élément mobile, on a réalisé des essais comparatifs en utilisant une installation de coupage avec générateur laser $CO_2$ pour générer un faisceau laser qui est amené à une tête de focalisation laser comprenant des optiques de focalisation, à savoir des lentilles.

Exemple 1

La tête de focalisation laser est équipée, selon le cas :

- d'une buse standard avec orifice de sortie de 1,8 mm de diamètre, ou
- d'une buse selon la Figure 3 avec corps en deux parties, jupe mobile cylindrique en acier et passage axial de la jupe de profil conique avec canal de sortie cylindrique d'un diamètre de 1,8 mm de diamètre.

Au cours de cet essai, le capteur capacitif est paramétré pour ajuster la distance entre la face avant de la coiffe et la surface supérieure de la tôle à couper à une distance de 1 mm.

Le gaz d'assistance utilisé est de l'azote.

La tôle à couper est en acier inoxydable 304 L de 5 mm d'épaisseur.

Le faisceau laser à une puissance de 4 kW et la vitesse de coupe est de 2,6 m/min.

Les résultats obtenus ont montré que :

- avec la buse standard, une pression du gaz de 14 bar est insuffisante pour obtenir une coupe de qualité. En effet, à 14 bar, les bords de coupe comportent de nombreuses bavures adhérentes. Ceci démontre que l'évacuation du métal en fusion se fait mal du fait d'une action insuffisante du gaz sur le métal en fusion devant être expulsé. Afin d'éliminer ces bavures, une pression de 16 bar a été nécessaire.
- avec la buse de l'invention, des essais faits à des pressions s'échelonnant entre 1 et 5 bar ont conduit à des coupes de bonne qualité, c'est-à-dire à des bords de coupe dépourvus de bavures adhérentes. La jupe de la buse permet de canaliser le gaz dans la saignée et d'expulser efficacement le métal fondu.

Exemple 2

La tête de focalisation laser est équipée, selon le cas :

• d'une buse standard (A) avec orifice de sortie de 1.5 mm de diamètre,
• d'une buse avec corps monobloc (B) selon le document WO-A-2012/156608, jupe mobile cylindrique en acier et passage axial de la jupe de profil conique avec canal de sortie cylindrique de 2 mm de diamètre, ou
• d'une buse (C) selon la Figure 3 avec corps en deux parties, jupe mobile cylindrique en acier et passage axial de la jupe de profil conique avec canal de sortie cylindrique d'un diamètre de 6 mm de diamètre.

Au cours de cet essai, le capteur capacitif est paramétré pour ajuster la distance entre la face avant de la coiffe et la surface supérieure de la tôle à couper à une distance de 1 mm.

Le gaz d'assistance utilisé est de l'azote.

La tôle à couper est en acier inoxydable 304 L de 2 mm d'épaisseur.

Le faisceau laser à une puissance de 4 kW.

Le Tableau ci-dessous présente les résultats de coupe obtenus dans les conditions de l'Exemple 2 avec les trois types de buse A, B, C susmentionnés, en termes de vitesse de coupe, de pression de gaz d'assistance mise en œuvre et de présence ou non de bavures et/ou de traces d'oxydation sur les faces de coupe.

Ces essais démontrent clairement l'efficacité de la buse C selon l'invention qui permet de réduire considérablement les pressions de gaz à mettre en œuvre par rapport à une buse standard, toutes conditions étant égales par ailleurs, et donc de réduire également les consommations gazeuses. En outre, la buse C selon l'invention permet un élargissement du diamètre de l'orifice de sortie du gaz d'assistance, ce qui permet sur fine épaisseur d'augmenter la vitesse de coupe sans générer de phénomène d'oxydation des faces de coupe, ce qui n'était pas possible avec la buse à jupe mobile B selon l'art antérieur.

Tableau 2

| Type de buse | Matériau / Epaisseur | Diamètre de l'orifice de sortie | Pression | Vitesse de coupe | Qualité de coupe |
|---|---|---|---|---|---|
| A | Acier 304L / 2 mm | 1.5 mm | 15 bar | 6.7 m/ min | Bonne, sans bavure ni oxydation |
| B | Acier 304L / 2 mm | 2.0 mm | 7 bar | 6.7 m/ min | Absence de bavures mais faces de coupe oxydées |
| C (invention) | Acier 304L / 2 mm | 6.0 mm | 7 bar | 9.5 m/min | Bonne, sans bavure ni oxydation |

**Revendications**

1.  Buse de coupage laser comprenant :

   - un corps (1) de buse comprenant un premier logement axial (3) traversant axialement ledit corps (1) de buse, un orifice d'entrée (9) permettant d'alimenter ledit premier logement axial (3) en gaz d'assistance (23) et un premier orifice de sortie (4) situé au niveau d'une face avant (1a) d'une première partie (11) dudit corps de buse (1), et
   - un élément mobile (2) agencé dans le premier logement axial (3) du corps (1) de buse, ledit élément mobile comprenant une partie avant (2a) formant jupe et un passage axial (5) avec un deuxième orifice de sortie (6) débouchant au niveau de ladite partie avant (2a) formant jupe,

le corps (1) de buse et l'élément mobile (2) étant formés d'un matériau conducteur électriquement et la première partie (11) du corps (1) de buse étant agencée autour de l'élément mobile (2),

**caractérisée en ce qu'**un manchon séparateur (14) est agencé entre la première partie (11) et l'élément mobile (2), ledit manchon séparateur (14) étant formé d'un matériau isolant électriquement ayant une permittivité relative inférieure à 8.

2. Buse selon la revendication 1, **caractérisée en ce que** le manchon séparateur (14) est formé d'un matériau isolant électriquement ayant une permittivité relative inférieure à 6.

3. Buse selon l'une des revendications 1 ou 2, **caractérisée en ce que** le manchon séparateur (14) est formé d'un matériau céramique.

4. Buse selon la revendication 3, **caractérisée en ce que** le matériau céramique est du nitrure de bore.

5. Buse l'une des revendications précédentes, **caractérisée en ce que** le manchon séparateur (14) comprend un deuxième logement axial (15) comprenant un troisième orifice de sortie (16) situé au niveau d'une face avant (14a) dudit manchon séparateur (14), l'élément mobile (2) étant agencé dans ledit deuxième logement axial (15) et ledit troisième orifice de sortie (16) débouchant au-dessus dudit deuxième orifice de sortie (6) du passage axial (5) de l'élément mobile (2) lorsque la partie avant (2a) fait saillie à l'extérieur du premier logement axial (3).

6. Buse l'une des revendications précédentes, **caractérisée en ce que** l'épaisseur en tout point de la paroi périphérique du manchon séparateur 14 est d'au moins 0,5 mm, de préférence au moins 1 mm.

7. Buse l'une des revendications précédentes, **caractérisée en ce que** les dimensions extérieures du manchon séparateur (14) sont déterminées de sorte à ménager un espace entre la première partie (11) du corps (1) de buse et l'élément mobile (2).

8. Buse l'une des revendications précédentes, **caractérisée en ce que** l'élément mobile (2) est formé d'un alliage de bronze au plomb.

9. Procédé de coupage par faisceau laser d'une pièce métallique (30) mettant en œuvre une buse selon l'une des revendications 1 à 8.

10. Procédé selon la revendication précédente, **caractérisé en ce qu'**on opère un rapprochement de l'élément mobile (2) jusqu'à ce que ledit élément mobile (2) soit en contact avec la surface supérieure de la pièce (30), la partie avant (2a) formant jupe et le gaz d'assistance (23) étant canalisé par ladite jupe dans la saignée de coupe (31).

11. Procédé selon l'une des revendications 9 ou 10, **caractérisé en ce que**, avant que l'élément mobile (2) ne se mette en contact avec la surface supérieure de la pièce (30), on mesure au moyen d'un capteur capacitif, une première valeur de capacité électrique entre la face avant (1a) du corps (1) de buse et la surface supérieure de la pièce (30), puis une fois que l'élément mobile (2) est en contact avec la pièce (30) pour réaliser l'opération de coupage, l'élément mobile (2) étant donc au même potentiel que la pièce (30), le capteur réalise alors, en plus de la première mesure, de capacité, une mesure de capacité globale résultant d'une multitude de mesures prises entre la surface extérieure de l'élément mobile (2) et la surface intérieure de la première partie (11) du corps (1) de buse.

12. Procédé selon l'une des revendications précédentes, **caractérisé en ce que** l'élément mobile (2) occupe des positions intermédiaires dans lesquelles la partie avant (2a) ne fait que partiellement saillie à l'extérieur du premier logement axial (3), ladite position intermédiaire étant fonction de la pression exercée par le gaz d'assistance (23) sur l'élément mobile (2).

13. Procédé selon l'une des revendications précédentes, **caractérisé en ce que** la pression du gaz d'assistance est comprise entre 1 et 5 bar.

14. Procédé selon l'une des revendications précédentes, **caractérisé en ce que** le gaz d'assistance (23) est un gaz inerte, de préférence de l'azote.

15. Procédé selon l'une des revendications précédentes, **caractérisé en ce que** la pièce (30) est en acier inoxydable.

**Patentansprüche**

1. Laserschneiddüse, umfassend:

   - einen Düsenkörper (1), umfassend eine erste axiale Aufnahme (3), die den Düsenkörper (1) axial quert, eine Eingangsöffnung (9), die ermöglicht, die erste axiale Aufnahme (3) mit Hilfsgas (23) zu versorgen, und eine erste Ausgangsöffnung (4), die sich auf dem Niveau einer vorderen Seite (1a) eines ersten Teils (11) des Düsenkörpers (1) befindet, und
   - ein mobiles Element (2), das in der ersten axialen Aufnahme (3) des Düsenkörpers (1) angeordnet ist, wobei das mobile Element einen vorderen Teil (2a) umfasst, der einen Mantel bildet, und einen axialen Durchlass (5) mit einer zweiten Ausgangsöffnung (6), die auf dem Niveau des vorderen Teils (2a), der einen Mantel bildet, mündet,

   wobei der Düsenkörper (1) und das mobile Element (2) aus einem elektrisch leitenden Material gebildet sind und der erste Teil (11) des Düsenkörpers (1) um das mobile Element (2) angeordnet ist,
   **dadurch gekennzeichnet, dass** eine Trennmuffe (14) zwischen dem ersten Teil (11) und dem mobilen Element (2) angeordnet ist, wobei die Trennmuffe (14) aus einem elektrisch isolierenden Material gebildet ist, das eine relative Permittivität von weniger als 8 aufweist.

2. Düse nach Anspruch 1, **dadurch gekennzeichnet, dass** die Trennmuffe (14) aus einem elektrisch isolierenden Material gebildet ist, das eine relative Permittivität von weniger als 6 aufweist.

3. Düse nach einem der Ansprüche 1 oder 2, **dadurch gekennzeichnet, dass** die Trennmuffe (14) aus einem keramischen Material gebildet ist.

4. Düse nach Anspruch 3, **dadurch gekennzeichnet, dass** das keramische Material Bornitrid ist.

5. Düse nach einem der vorstehenden Ansprüche, **dadurch gekennzeichnet, dass** die Trennmuffe (14) eine zweite axiale Aufnahme (15) umfasst, umfassend eine dritte Ausgangsöffnung (16), die sich auf dem Niveau einer vorderen Seite (14a) der Trennmuffe (14) befindet, wobei das mobile Element (2) in der zweiten axialen Aufnahme (15) angeordnet ist und die dritte Ausgangsöffnung (16) über der zweiten Ausgangsöffnung (6) des axialen Durchlasses (5) des mobilen Elements (2) mündet, wenn der vordere Teil (2a) von der ersten axialen Aufnahme (3) nach außen hervorsteht.

6. Düse nach einem der vorstehenden Ansprüche, **dadurch gekennzeichnet, dass** die Dicke an jedem Punkt der umlaufenden Wand der Trennmuffe (14) mindestens 0,5 mm, vorzugsweise mindestens 1 mm beträgt.

7. Düse nach einem der vorstehenden Ansprüche, **dadurch gekennzeichnet, dass** die Außenabmessungen der Trennmuffe (14) derart bestimmt werden, um einen Raum zwischen dem ersten Teil (11) des Düsenkörpers (1) und dem mobilen Element (2) herbeizuführen.

8. Düse nach einem der vorstehenden Ansprüche, **dadurch gekennzeichnet, dass** das mobile Element (2) aus einer Legierung aus Bronze und Blei gebildet ist.

9. Verfahren zum Schneiden durch Laserstrahl eines Metallteils (30), das eine Düse nach einem der Ansprüche 1 bis 8 anwendet.

10. Verfahren nach dem vorstehenden Anspruch, **dadurch gekennzeichnet, dass** eine Annäherung des mobilen Elements (2) vorgenommen wird, bis das mobile Element (2) in Kontakt mit der oberen Oberfläche des Teils (30) ist, wobei der vordere Teil (2a) einen Mantel bildet und das Hilfsgas (23) durch den Mantel in der Schnittfuge (31) kanalisiert wird.

11. Verfahren nach einem der Ansprüche 9 oder 10, **dadurch gekennzeichnet, dass** bevor das mobile Element (2) in Kontakt mit der oberen Oberfläche des Teils (30) kommt, anhand eines kapazitiven Sensors ein erster elektrischer Kapazitätswert zwischen der vorderen Seite (1a) des Düsenkörpers (1) und der oberen Oberfläche des Teils (30) gemessen wird, danach, sobald das mobile Element (2) in Kontakt mit dem Teil (30) ist, um den Schneidevorgang durchzuführen, das mobile Element (2) somit auf demselben Potenzial wie das Teil (30) ist, der Sensor zusätzlich zu der ersten Kapazitätsmessung eine Messung der allgemeine Kapazität durchführt, die aus einer Vielzahl von Messungen resultiert, die zwischen der Außenoberfläche des mobilen Elements (2) und der Innenoberfläche des ersten Teils (11) des Düsenkörpers (1) erhoben werden.

12. Verfahren nach einem der vorstehenden Ansprüche, **dadurch gekennzeichnet, dass** das mobile Element (2) Zwischenpositionen einnimmt, in denen der vordere Teil (2a) nur teilweise von der ersten axialen Aufnahme (3) nach außen hervorsteht, wobei die Zwischenposition von dem Druck abhängig ist, der von dem Hilfsgas (23) auf das mobile Element (2) ausgeübt wird.

13. Verfahren nach einem der vorstehenden Ansprüche, **dadurch gekennzeichnet, dass** der Druck des Hilfsgases zwischen 1 und 5 bar enthalten ist.

14. Verfahren nach einem der vorstehenden Ansprüche, **dadurch gekennzeichnet, dass** das Hilfsgas (23) ein Inertgas, vorzugsweise Stickstoff, ist.

15. Verfahren nach einem der vorstehenden Ansprüche, **dadurch gekennzeichnet, dass** das Teil (30) aus nichtrostendem Stahl ist.

**Claims**

1. Laser-cutting nozzle comprising:

   - a nozzle body (1) comprising a first axial recess (3) extending axially through said nozzle body (1), an inlet orifice (9) for supplying said first axial recess (3) with assist gas (23) and a first outlet orifice (4) located on a front face (1a) of a first portion (11) of said nozzle body (1), and
   - a movable element (2) arranged in the first axial recess (3) of the nozzle body (1), said movable element comprising a front portion (2a) forming a skirt and an axial passage (5) with a second outlet orifice (6) opening on said front portion (2a) forming a skirt,

   the nozzle body (1) and the movable element (2) being made of an electrically conductive material and the first portion (11) of the nozzle body (1) being arranged around the movable element (2),
   **characterised in that** a separator sleeve (14) is arranged between the first portion (11) and the movable element (2), said separator sleeve (14) being formed from an electrically-insulating material having a relative permittivity less than 8.

2. Nozzle according to claim 1, **characterised in that** the separator sleeve (14) is formed from an electrically-insulating material having a relative permittivity less than 6.

3. Nozzle according to one of claims 1 or 2, **characterised in that** the separator sleeve (14) is formed from a ceramic material.

4. Nozzle according to claim 3, **characterised in that** the ceramic material is boron nitride.

5. Nozzle according to one of the preceding claims, **characterised in that** the separator sleeve (14) comprises a second axial housing (15) comprising a third outlet orifice (16) located on a front face (14a) of said separator sleeve (14), the movable element (2) being arranged in said second axial housing (15) and said third outlet orifice (16) opening above said second outlet orifice (6) of the axial passage (5) of the movable element (2) when the front portion (2a) protrudes to the outside of the first axial recess (3)

6. Nozzle according to one of the preceding claims, **characterised in that** the thickness at any point of the peripheral wall of the separator sleeve (14) is at least 0.5mm, preferably at least 1mm.

7. Nozzle according to one of the preceding claims, **characterised in that** the outer dimensions of the separator sleeve (14) are determined so as to arrange a space between the first portion (11) of the nozzle body (1) and the movable element (2).

8. Nozzle according to one of the preceding claims, **characterised in that** the movable element (2) is formed from a lead bronze alloy.

9. Method for laser beam cutting of a metal part (30), implementing a nozzle according to one of claims 1 to 8.

10. Method according to the preceding claim, **characterised in that** the movable element (2) is brought closer until said movable element (2) is in contact with the upper surface of the part (30), the front portion (2a) forming a skirt and the assist gas (23) being channelled by said skirt into the cutting kerf (31).

11. Method according to one of claims 9 or 10, **characterised in that**, before the movable element (2) comes into contact with the upper surface of the part (30), is measured, by means of a capacitive sensor, a first value of electrical capacitance between the front face (1a) of the nozzle body (1) and the upper surface of the part (30), then once the movable element (2) is in contact with the part (30) in order to perform the cutting operation, the movable element (2) being therefore at the same potential as the part (30), the sensor then takes, in addition to the first measurement, of capacitance, a measurement of the global capacitance resulting from a multitude of measurements taken between the external surface of the movable element (2) and the internal surface of the first portion (11) of the nozzle body (1)

12. Method according to one of the preceding claims, **characterised in that** the movable element (2) occupies intermediate positions wherein the front portion (2a) protrudes only partially outside of the first axial recess (3), said intermediate position being according to the pressure exerted by the assist gas (23) on the movable element (2).

13. Method according to one of the preceding claims, **characterised in that** the pressure of the assist gas is between 1 and 5 bar.

14. Method according to one of the preceding claims, **characterised in that** the assist gas (23) is an inert gas, preferably nitrogen.

15. Method according to one of the preceding claims, **characterised in that** the part (30) is made from stainless steel.

EP 3 315 247 B1

FIG.1A

FIG.1B

15

FIG.2

A

10

12

7

1

8

$r_2$

18

$r_1$

$\underline{5}$

11

16

15

14

2a

6    2    19b

A

FIG.3

1

30

2a

FIG.4A

1

30

FIG.4B

**EP 3 315 247 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1669159 A
- JP 62006790 A
- JP 61037393 A
- JP 63108992 A
- JP 63040695 A
- US 4031351 A

- WO 2012156608 A
- JP 2011177727 A
- EP 1500459 A
- JP 11277271 A